# EUROPÄISCHE PATENTSCHRIFT

(11) **EP 2 501 589 B1**
(45) Veröffentlichungstag und Bekanntmachung des Hinweises auf die Patenterteilung: **23.10.2013**
(21) Anmeldenummer: 10781674.6
(22) Anmeldetag: 19.11.2010
(51) Int. Cl.: B60R 19/56

(54) **UNTERFAHRSCHUTZ FÜR NUTZFAHRZEUGE**
UNDERRIDE PROTECTION FOR COMMERCIAL VEHICLES
PROTECTION ANTI-ENCASTREMENT POUR VEHICULES UTILITAIRES

(30) Priorität: 20.11.2009 DE 102009053866
(43) Veröffentlichungstag der Anmeldung: 26.09.2012
(73) Patentinhaber: GMF Umformtechnik GmbH, 33647 Bielefeld (DE)
(72) Erfinder: RAAP, Volker, 33659 Bielefeld (DE); KROLO, Mario, 33803 Steinhagen (DE)
(74) Vertreter: Cohausz & Florack
(86) Internationale Anmeldenummer: PCT/EP2010/067810
(87) Internationale Veröffentlichungsnummer: WO 2011/061280

(56) Entgegenhaltungen:
- JP-A- 2004 243 831
- JP-A- 2006 036 071
- JP-A- 2008 260 367

## Beschreibung

Die Erfindung betrifft einen Unterfahrschutz, insbesondere Frontunterfahrschutz für Nutzfahrzeuge, mit einem mehrteiligen Querträger, der aus einem länglichen Mittelstück, einem rechten Endstück und einem linken Endstück gebildet ist, wobei die Endstücke mit dem Mittelstück verbunden sind.

Große Lastkraftwagen und andere schwere Nutzfahrzeuge werden heutzutage mit einem Unterfahrschutz versehen, um hinsichtlich einer Kollision mit einem Personenkraftwagen ein Unterfahren des Personenkraftwagens unter den Lastkraftwagen zu verhindern und damit die Verletzungsgefahr für die Insassen des Personenkraftwagens zu verringern.

Herkömmliche Frontunterfahrschutzvorrichtungen bestehen aus einem einteiligen Querträger in Form eines durchgehenden Profils und Verbindungsteilen für die Anbringung des Querträgers am Fahrgestell oder an anderen Bauteilen. Dabei sind die Endabschnitte des Querträgers (Profils) normalerweise gegenüber der Längsachse des mittleren Abschnitts des Querträgers nach hinten gebogen bzw. schräg abgewinkelt. Im Bereich der Anbindung des Querträgers an das Fahrgestell sowie im Bereich der bogenförmigen bzw. abgewinkelten Endabschnitte ist der Unterfahrschutz im Kollisionsfall höheren Belastungen ausgesetzt als im mittleren Abschnitt des Querträgers. Da der Unterfahrschutz für die höheren Belastungen insbesondere im Bereich der Anbindung des Querträgers auszulegen ist, ist der mittlere Abschnitt des Querträgers normalerweise überdimensioniert, was unnötiges Gewicht bedeutet.

Aus der japanischen Patentanmeldung 2004243831 A ist ein Frontunterfahrschutz für schwere Lastkraftwagen bekannt. Der Unterfahrschutz weist einen aus drei Teilen zusammengesetzten hohlen Querträger auf. Der Querträger ist aus einem im Wesentlichen geradlinigen Mittelstück, einem separat gefertigten rechten Endstück und einem separat gefertigten linken Endstück zusammengesetzt, wobei die Endstücke mit dem Mittelstück verschweißt sind und jeweils einen gegenüber dem geradlinigen Mittelstück nach hinten gebogenen Endabschnitt aufweisen. Um unnötiges Gewicht zu vermeiden, ist das Mittelstück aus einem Profil mit geringerer Blechstärke als die beiden Endstücke gefertigt. In dem jeweiligen hohlen Endstück ist im Bereich der Anbindungsstelle des Querträgers ein plattenförmiges, im Querschnitt U-förmiges Verstärkungselement eingesetzt, das sich im Fertigzustand des Querträgers bis in das Mittelstück erstreckt. Aus der JP 2008260367 A ist ein Unterfahrschutz gemäß dem Oberbegriff des Anspruchs 1 bekannt.

Der vorliegenden Erfindung liegt die Aufgabe zugrunde, einen Unterfahrschutz der eingangs genannten Art bereitzustellen, der bei geringem Gewicht und relativ kostengünstiger Herstellbarkeit eine hohe Gestaltungsfreiheit hinsichtlich einer fahrzeugspezifischen Optimierung des Crashverhaltens bietet.

Diese Aufgabe wird durch einen Unterfahrschutz mit den Merkmalen des Anspruchs 1 gelöst.

Der erfindungsgemäße Unterfahrschutz weist im Wesentlichen einen mehrteiligen Querträger auf, der aus einem länglichen Mittelstück, einem rechten Endstück und einem linken Endstück gebildet ist, wobei die Endstücke mit dem Mittelstück verbunden sind. Erfindungsgemäß ist das jeweilige Endstück aus einer vorderen Blechschale einer hinteren Blechschale gebildet, wobei die Blechschalen des jeweiligen Endstückes aus Blechen unterschiedlicher Werkstoffgüte hergestellt sind und einen Hohlkörperabschnitt definieren, dessen in Fahrtrichtung gemessene mittlere Querschnittstiefe größer als die in Fahrtrichtung gemessene Querschnittstiefe des Mittelstückes ist. Dabei beträgt die in Fahrtrichtung gemessene mittlere Querschnittstiefe des Hohlkörperabschnitts der Blechschalen vorzugsweise mindestens das 1,05-fache, insbesondere mindestens das 1,1-fache der in Fahrtrichtung gemessenen Querschnittstiefe des Mittelstückes.

Der Aufbau des jeweiligen Endstückes aus mindestens zwei Blechschalen bietet eine hohe Gestaltungsfreiheit, um das Crashverhalten, insbesondere das Verformungsverhalten eines gattungsgemäßen Unterfahrschutzes auf kostengünstige Weise zu optimieren. Die aus umgeformten Blechschalen hergestellten Endstücke ermöglichen eine sehr variable Gestaltung des Querschnitts der hohlen Endstücke über deren Länge. Der Querschnitt kann dabei den mechanischen Anforderungen, insbesondere dem Biegemomentenverlauf vorteilhaft angepasst werden. Des Weiteren können die Blechschalen so geformt werden, dass bei dem Unterfahrschutz zusätzliche Bauteile zur Überbrückung von Distanzen für dessen Anbindung an das Fahrgestell entfallen.

Der von den Blechschalen des jeweiligen Endstückes definierte Hohlkörperabschnitt kann insbesondere so ausgebildet sein, dass er Aufprallenergie durch plastische Verformung aufnehmen kann und damit die Funktion einer sogenannten Crashbox übernimmt. Im Unterschied zu einem herkömmlichen Unterfahrschutz, der im Bereich seiner Anbindung an das Fahrgestell optional mit zusätzlichen Crashboxen versehen werden kann, bietet der erfindungsgemäße Unterfahrschutz die Möglichkeit, die Funktion einer Crashbox in dem Querträger zu integrieren. Durch diese Integration werden die Anzahl der Einzelteile und der Fertigungs- bzw. Montageaufwand gegenüber einem herkömmlichen, durch Crashboxen ergänzten Unterfahrschutz verringert. Insbesondere kann das Crashverhalten hinsichtlich der Verformungswege, des Kraftverlaufs sowie der Aufprallenergieaufnahme durch die Werkstoffwahl und Formgebung in gewünschter Weise beeinflusst werden.

Aufgrund der Möglichkeit, die dreidimensionale Form der Blechschalen weitgehend frei gestalten zu können, ist es auch möglich, in mindestens eine der Blechschalen des jeweiligen Endstückes Sicken und/oder Vertiefungen einzuformen. Durch das gemäß einer weiteren Ausgestaltung der Erfindung vorgesehene Einbringen von Sicken und/oder Vertiefungen an bestimmten Stellen der Blechsschalen werden die Steifigkeit und das Verformungsverhalten der Endstücke gezielt beeinflusst.

Eine weitere bevorzugte Ausgestaltung des erfindungsgemäßen Unterfahrschutzes besteht darin, dass die Blechschalen aus Blechen unterschiedlicher Blechstärke hergestellt sind. Insbesondere können die Blechschalen des jeweiligen Endstückes zumindest teilweise miteinander geschachtelt sein. Die Schachtelung, Blechstärken und/oder Werkstoffgüten der Blechschalen können an die jeweiligen Anforderungen (z.B. Steifigkeit, Bauteil-Lebensdauer, Herstellprozess usw.) angepasst werden. Die Lage und Ausführung der Fügestellen kann ebenfalls an die vorstehend genannten Anforderungen angepasst werden.

Ein vorteilhaftes Crashverhalten ergibt sich insbesondere dann, wenn nach einer bevorzugten Ausgestaltung der Erfindung die hintere Blechschale des jeweiligen Endstückes des Querträgers ein größere Blechstärke aufweist als die vordere Blechschale.

Ferner wird zur Überbrückung von Distanzen bei der Anbindung an das Fahrgestell bzw. zur Integration der Funktion einer Crashbox vorgeschlagen, dass die hintere Blechschale mit einem Anbindungsblechformteil zur Verbindung des Unterfahrschutzes mit dem Fahrgestell des Nutzfahrzeuges versehen ist. Der Anbindungsbereich an das Fahrgestell und/oder die Stoßstange befindet sich im Wesentlichen im Bereich des mittleren Drittels der das Endstück bildenden Blechschalen. Neben des hohen Kraftaufnahmepotentials ist insbesondere, wenn keine zusätzlichen Teile wie Anbindungsbleche oder Halter verwendet werden, ausreichend Raum vorhanden, den Anbindungsbereich in den Blechschalen während der Formgebung anzuformen, quasi den Anbindungsbereich in den Blechschalen zu integrieren. Die mittlere in Fahrtrichtung gemessene Querschnittstiefe der vorderen Blechschale im Bereich der Anbindung beträgt mindestens das 1,2-fache, vorzugsweise mindestens das 2-fache der fluchtend dazu gemessenen Querschnittstiefe der hinteren Blechschale.

Das Mittelstück des erfindungsgemäßen Unterfahrschutzes ist typischerweise aus Stahlblech gefertigt. Nach einer vorteilhaften Alternative ist jedoch auch vorgesehen, dass das Mittelstück aus Nichteisen-Werkstoff, vorzugsweise aus Aluminium und/oder Kunststoff gefertigt ist. Hierdurch kann das Gewicht des Unterfahrschutzes weiter verringert werden. In diesem Fall kommen als Fügeverfahren zur Verbindung des Mittelstückes mit den Endstücken insbesondere Klebe-, Niet- und Schraubverfahren in Betracht.

Weitere bevorzugte und vorteilhafte Ausgestaltungen des erfindungsgemäßen Unterfahrschutzes sind in den Unteransprüchen angegeben.

Nachfolgend wird die Erfindung anhand einer mehrere Ausführungsbeispiele darstellenden Zeichnung näher erläutert. Es zeigen:

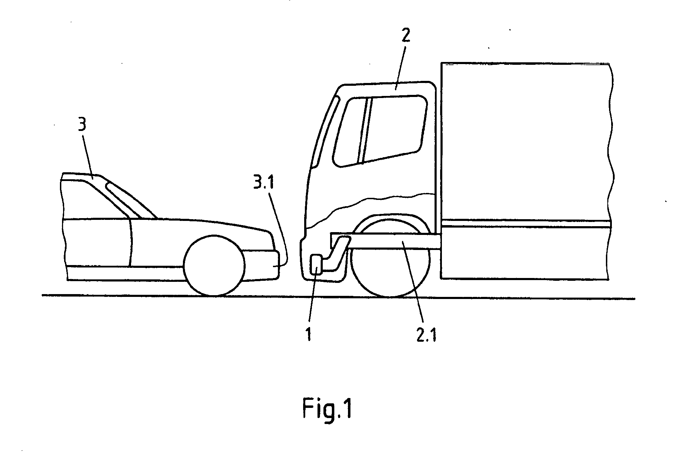

- Fig. 1: eine schematische Darstellung eines Personenkraftwagens und eines Lastkraftwagens mit einem Frontunterfahrschutz;
- Fig. 2: einen Frontunterfahrschutz in perspektivischer Vorderansicht;
- Fig. 3: den Frontunterfahrschutz der Fig. 2, in perspektivischer Rückansicht;
- Fig. 4: zwei Blechschalen zur Herstellung des linken Endstückes eines Frontunterfahrschutz gemäß Fig. 2, in perspektivischer Darstellung;
- Fig. 5: einen Abschnitt des Querträgers des Frontunterfahrschutzes mit dem rechten Endstück, in Draufsicht;
- Fig. 6a: eine Querschnittansicht entlang der Schnittlinie VIa-VIa in Fig. 5;
- Fig. 6b: eine Querschnittansicht entlang der Schnittlinie VIb-VIb in Fig. 5; und
- Fig. 6c: eine Querschnittansicht entlang der Schnittlinie VIc-VIc in Fig. 5.

Der in der Zeichnung dargestellte Unterfahrschutz 1 ist für eine Montage an der Vorderseite eines Nutzfahrzeuges 2, insbesondere eines Lastkraftwagens bestimmt. Im Falle einer Kollision des Nutzfahrzeuges 2 mit einem Personenkraftwagen 3, dessen Stoßstange 3.1 üblicherweise erheblich tiefer angeordnet ist als die vordere Stoßstange des Nutzfahrzeuges 2, verhindert der Unterfahrschutz 1, dass das relativ niedrige Vorderteil des Personenkraftwagens 3 unter das Fahrgestell 2.1 des Nutzfahrzeuges 2 gerät. Die Verletzungsgefahr für die Insassen des kollidierenden Personenkraftwagens 3 ist durch den Frontunterfahrschutz 1 des Nutzfahrzeuges wesentlich reduziert.

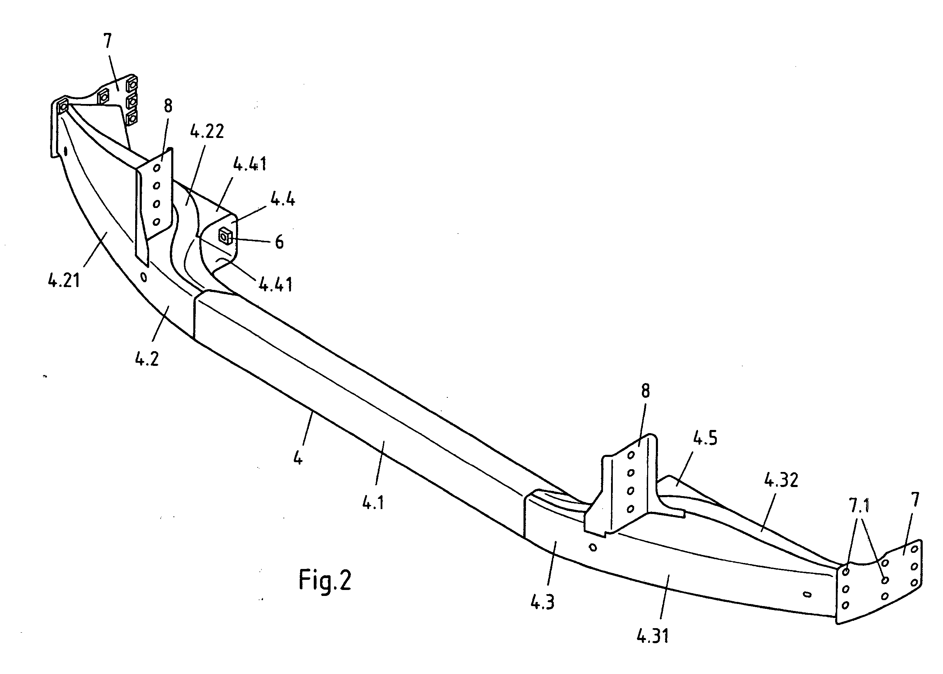

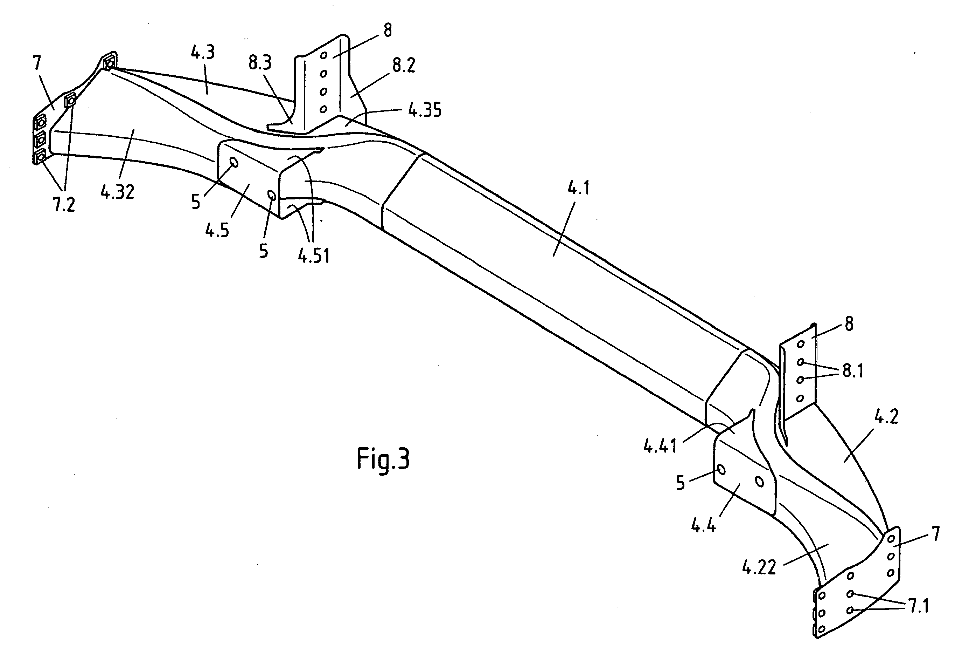

In den Figuren 2 und 3 ist ein erstes Ausführungsbeispiel eines erfindungsgemäßen Unterfahrschutzes gezeigt, der besonders als Frontunterfahrschutz für Lastkraftwagen und Trailer geeignet ist. Der Unterfahrschutz ist aus einem mehrteiligen Querträger 4 gebildet. Der Querträger 4 ist aus einem Mittelstück (Mittelteil) 4.1 und Endstücken (Seitenteilen) 4.2, 4.3 aufgebaut. Das Mittelstück (Querprofil) 4.1 ist rohrförmig ausgebildet. Es kann beispielsweise aus einem Stahlband durch Rollformen hergestellt sein. Alternativ kann das Mittelstück 4.1 auch aus im Querschnitt im Wesentlichen U-förmigen, miteinander verschweißten Blechschalen bestehen. Abweichend von den Figuren 2 und 3 kann das Mittelstück 4.1 auch ein offenes Querschnittsprofil aufweisen und/oder als Pressteil ausgeführt sein.

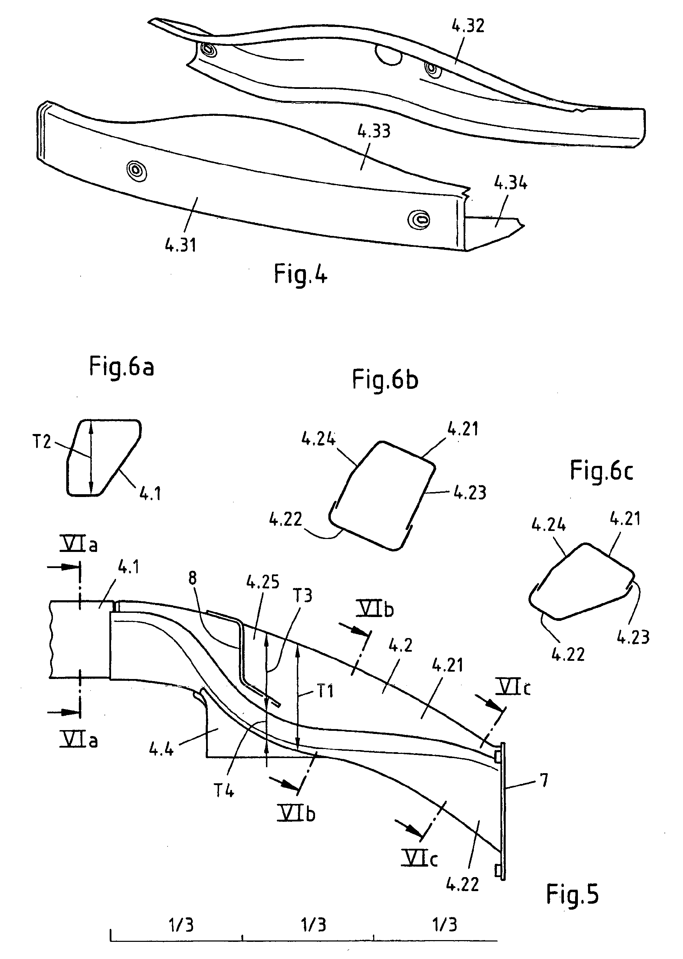

Typischerweise ist das Mittelstück (Querprofil) 4.1 geradlinig ausgeführt. Es weist über seine Länge ein im Wesentlichen konstantes, asymmetrisches Querschnittsprofil auf (vgl. Fig. 6a). Die Vorderseite des Mittelstückes 4.1 ist dabei höher als die dazu im Wesentlichen parallel verlaufende Rückseite. Die Länge des Mittelstückes 4.1 liegt beispielsweise im Bereich von 700 mm bis 1400 mm, vorzugsweise im Bereich von 900 mm bis 1200 mm.

Die mit den beiden Enden des Mittelstückes 4.1 verbundenen Endstücke (Seitenteile) 4.2, 4.3 sind aus einer vorderen und einer hinteren Blechschale 4.21, 4.31, 4.22, 4.32 gebildet. Die Blechschalen 4.21, 4.31, 4.22, 4.32 sind im Querschnitt betrachtet im Wesentlichen U-förmig ausgebildet. Die vordere Blechschale 4.21, 4.31 ist von ihrer Verbindungsstelle am Mittelstück 4.1 ausgehend zu ihrem Ende hin bogenförmig ausgeführt. Ihre Schenkel 4.23, 4.24, 4.33, 4.34 weisen eine stetig variierende Tiefe über die Länge der Blechschale 4.21 bzw. 4.31 auf. Diese Tiefenvariation hat den Vorteil, dass gezielt Einfluss auf das Crashverhalten genommen werden kann. Die Tiefe der Schenkel 4.23, 4.24, 4.33, 4.34 nimmt ausgehend von der Verbindungsstelle am Mittelstück 4.1 zunächst zu und dann zum äußeren Ende hin wieder ab.

Die hintere Blechschale 4.22, 4.32 weist eine S-förmige gebogene Rückseite auf, deren Höhe ausgehend von der Verbindungsstelle am Mittelstück (Querprofil) 4.1 zunächst zunimmt und dann zum äußeren Ende hin wieder abnimmt. An der Rückseite der hinteren Blechschale ist ein Anbindungsblechformteil 4.4, 4.5 zur Verbindung des Unterfahrschutzes mit dem Fahrgestell 2.1 eines Nutzfahrzeuges (Lastkraftwagens) 2 befestigt, vorzugsweise angeschweißt. Das Anbindungsblechformteil 4.4, 4.5 weist einen plattenförmigen, im Wesentlichen ebenen Anbindungssteg auf, an dem sich Schenkel 4.41, 4.51 anschließen, die der bogenförmigen Kontur der Rückseite der hinteren Blechschale angepasst sind. Der Anbindungssteg weist Befestigungsbohrungen 5 auf, die mit angeschweißten Muttern 6 versehen sind.

Die Blechschalen 4.21, 4.31, 4.22, 4.32 des jeweiligen Endstückes sind miteinander verschweißt. Vorzugsweise sind die Blechschalen 4.21, 4.31, 4.22, 4.32 im Stumpfstoß miteinander verschweißt. Alternativ können die einander zugewandten Kanten der Schenkel der Blechschalen 4.21, 4.31, 4.22, 4.32 aber auch einander überlappen, so dass die Schweißnähte dann als Kehlschweißnähte ausgeführt sind (vgl. Figuren 6b und 6c). Die Enden des Mittelstückes 4.1 ragen in die hohlen Endstücke 4.2, 4.3. Alternativ können auch die dem Mittelstück zugewandten Enden der Endstücke 4.2, 4.3 in das Mittelstück 4.1 ragen. Die Endstücke 4.2, 4.3 bzw. die Blechschalen 4.21, 4.31, 4.22, 4.32 sind mit dem Mittelstück 4.1 verschweißt, wobei die Schweißverbindungen vorzugsweise als Kehlschweißnähte ausgeführt sind.

Die Blechschalen 4.21, 4.31, 4.22, 4.32 des jeweiligen Endstückes 4.2, 4.3 definieren einen Hohlkörperabschnitt 4.25, 4.35 zur Stoßenergieaufnahme durch plastische Verformung, dessen in Fahrtrichtung gemessene mittlere Querschnittstiefe T1 größer als die in Fahrtrichtung gemessene Querschnittstiefe T2 des Mittelstückes 4.1 ist, bevorzugt mindestens das 1,2-fache der Querschnittstiefe T2 beträgt.

Die mittlere in Fahrtrichtung gemessene Querschnittstiefe T3 der vorderen Blechschale 4.21, 4.31 beträgt im Bereich des Anbindungsblechformteils 4.4, 4.5 bzw. in dem im Wesentlichen im mittleren Drittel befindlichen Anbindungsbereich mindestens das 1,2-fache, vorzugsweise mindestens das 1,5- fache, besonders bevorzugt mindestens das 2-fache der fluchtend dazu gemessenen Querschnittstiefe T4 der hinteren Blechschale 4.22, 4.32. Der dargestellte Unterfahrschutz weist somit integrierte Crashboxen im Bereich seiner Anbindungsplatten 4.4, 4.5 auf.

Die hintere Blechschale 4.22, 4.32 ist aus einem Stahlblech geformt, das eine größere Blechdicke aufweist als das Stahlblech, aus dem die vordere Blechschale 4.21, 4.31 hergestellt ist. Die Blechdicke der vorderen Blechschale 4.21, 4.31 beträgt beispielsweise ca. 2,5 mm, während die hintere Blechschale 4.22, 4.32 eine Blechdicke von ca. 3,0 mm aufweist. Darüber hinaus sind die vorderen und hinteren Blechschalen 4.21, 4.31, 4.22, 4.32 aus Stahlblechen unterschiedlicher Werkstoffgüte hergestellt. Die hintere Blechschale 4.22, 4.32 ist beispielsweise aus einem kaltumformbaren, mikrolegierten Stahlblech hergestellt, das eine Zugfestigkeit Rₘ im Bereich von 480 bis 620 N/mm² und eine Streckgrenze Rₑ im Bereich von 400 bis 440 N/mm² aufweist. Die vordere Blechschale 4.21, 4.31 ist dagegen aus einem höherfesten, kaltumformbaren Stahlblech hergestellt; sie besteht vorzugsweise aus einem Mehrphasen- oder Komplexphasenstahl, der eine Zugfestigkeit Rₘ im Bereich von 700 bis 1.000 N/mm² und eine Streckgrenze Rₑ im Bereich von 600 bis 720 N/mm² aufweist.

Das Mittelstück 4.1 kann aus einem Stahlblech der gleichen Werkstoffgüte wie die vordere Blechschale 4.21, 4.31 gefertigt sein. Die Blechdicke des Mittelstückes 4.1 ist jedoch vorzugsweise geringer als die Blechdicke der vorderen Blechschale 4.21, 4.31. Die Blechdicke des Mittelstückes 4.1 beträgt beispielsweise ca. 2,0 mm.

Die Anbindungsblechformteile 4.4, 4.5 können aus einem Stahlblech der gleichen Werkstoffgüte wie die hinteren Blechschalen 4.22, 4.32 gefertigt sein. Die Blechdicke der Anbindungsblechformteile 4.4, 4.5 ist jedoch vorzugsweise größer als die der hinteren Blechschalen 4.22, 4.32. Die Blechdicke der Anbindungsblechformteile 4.4, 4.5 beträgt beispielsweise ca. 3,5 mm.

An den äußeren Enden der Endstücke 4.2, 4.3 sind Halter 7 zum Anschrauben von Trittstufen (nicht gezeigt) angeschweißt. Der jeweilige Halter 7 ist plattenförmig ausgebildet und weist Befestigungsbohrungen 7.1 auf, die mit angeschweißten Muttern 7.2 versehen sind.

Des Weiteren ist das jeweilige Endstück 4.2, 4.3 mit einem Halter 8 um Anschrauben einer Stoßstange (nicht gezeigt) versehen. Der Halter 8 ist mit der Oberseite des oberen Schenkels 4.23, 4.33 der vorderen Blechschale 4.21, 4.31 verschweißt. Er ist mit mehreren Befestigungsbohrungen 8.1 versehen, die beispielsweise in Form einer im Wesentlichen vertikalen Lochreihe angeordnet sind. Ferner weist der Halter 8 abgewinkelte Schenkel 8.2, 8.3 auf, die mit dem die Befestigungsbohrungen 8.1 aufweisenden Mittelsteg, in Draufsicht betrachtet, eine Z-förmige Befestigungsbasis bilden.

Das in Fig. 7 dargestellte Ausführungsbeispiel unterscheidet sich von dem in den Figuren 2 und 3 gezeigten Ausführungsbeispiel im Wesentlichen dadurch, dass das Mittelstück 4.1 über seine Länge ein im Wesentlichen konstantes, symmetrisches Querschnittsprofil aufweist, und dass das jeweilige Endstück 4.2, 4.3 aus einer oberen Blechschale 4.27, 4.38 und einer unteren Blechschale 4.28, 4.37 gebildet ist, wobei die obere Blechschale 4.27 des rechten Endstückes 4.2 der unteren Blechschale 4.37 des linken Endstückes 4.3 entspricht, während die obere Blechschale 4.38 des linken Endstückes 4.3 der unteren Blechschale 4.28 des rechten Endstückes 4.2 entspricht. Die Endstücke 4.2, 4.3 sind in diesem Fall also als Gleichteile ausgeführt. In die Blechschalen 4.27, 4.37, 4.28, 4.38 sind Vertiefungen 10 eingeformt, welche die Steifigkeit und das plastische Verformungsverhalten der Endstücke 4.2, 4.3 beeinflussen.

Die Ausführung der Erfindung ist nicht auf die vorstehend beschriebenen und in der Zeichnung dargestellten Ausführungsbeispiele beschränkt. Vielmehr sind zahlreiche Varianten denkbar, die auch bei von den offenbarten Ausführungsbeispielen abweichender Gestaltung von der in den beiliegenden Ansprüchen angegebenen Erfindung Gebrauch machen. So kann beispielsweise das Mittelstück 4.1 des Querträgers nicht nur gerade, sondern bei Bedarf, insbesondere bei entsprechenden Bauraumanforderungen auch bogenförmig ausgeführt sein. Auch kann das Mittelstück 4.1 des Unterfahrschutzes sowohl als geschlossenes Profil als auch als offenes Profil ausgeführt sein. Ebenso liegt es Rahmen der Erfindung, die Querschnittsform des Mittelstückes 4.1 über dessen Länge nicht konstant, sondern variierend auszuführen.

Ferner kann in den Endstücken die Trittstufe integriert werden, beispielsweise als Ausnehmung in mindestens einer der Blechschalen oder als durch Umformen flach ausgebildetes, dem Mittelstück abgewandtes Ende. Alternativ ist die Trittstufe ebenfalls als Zusatzteil mit dem Endstück beispielsweise mittels Schweißen verbindbar.

## Patentansprüche

1. Unterfahrschutz, insbesondere Frontunterfahrschutz für Nutzfahrzeuge, mit einem mehrteiligen Querträger, der aus einem länglichen Mittelstück (4.1), einem rechten Endstück (4.2) und einem linken Endstück (4.3) gebildet ist, wobei die Endstücke (4.2, 4.3) mit dem Mittelstück (4.1) verbunden sind, wobei das jeweilige Endstück (4.2, 4.3) aus einer vorderen Blechschale (4.21, 4.31) und einer hinteren Blechschale (4.22, 4.32) gebildet ist, wobei die Blechschalen (4.21, 4.22, 4.31, 4.32) des jeweiligen Endstückes (4.2, 4.3) einen Hohlkörperabschnitt (4.25, 4.35) definieren, dessen in Fahrtrichtung gemessene mittlere Querschnittstiefe (T1) größer als die in Fahrtrichtung gemessene Querschnittstiefe (T2) des Mittelstückes (4.1) ist, **dadurch gekennzeichnet, dass** die Blechschalen (4.21, 4.22, 4.31, 4.32) des jeweiligen Endstückes (4.2, 4.3) aus Blechen unterschiedlicher Werkstoffgüte hergestellt sind.

2. Unterfahrschutz nach Anspruch 1, **dadurch gekennzeichnet, dass** die Blechschalen (4.21, 4.22, 4.31, 4.32) aus Blechen unterschiedlicher Blechstärke hergestellt sind.

3. Unterfahrschutz nach Anspruch 1 oder 2, **dadurch gekennzeichnet, dass** die Blechschalen (4.21, 4.22, 4.31, 4.32) des jeweiligen Endstückes (4.2, 4.3) zumindest teilweise miteinander geschachtelt sind.

4. Unterfahrschutz nach einem der Ansprüche 1 bis 3, **dadurch gekennzeichnet, dass** die hintere Blechschale (4.22, 4.32) eine größere Blechstärke aufweist als die vordere Blechschale (4.21, 4.31).

5. Unterfahrschutz nach Anspruch 4, **dadurch gekennzeichnet, dass** die hintere Blechschale (4.22, 4.32) mit einem Anbindungsblechformteil (4.4, 4.5) zur Verbindung des Unterfahrschutzes mit dem Fahrgestell (2.1) des Nutzfahrzeuges (2) versehen ist, wobei die mittlere in Fahrtrichtung gemessene Querschnittstiefe (T3) der vorderen Blechschale (4.21, 4.31) im Bereich des Anbindungsblechformteils (4.4, 4.5) mindestens das 1,2-fache, vorzugsweise mindestens das 2-fache der fluchtend dazu gemessenen Querschnittstiefe (T4) der hinteren Blechschale (4.22, 4.32) beträgt.

6. Unterfahrschutz nach einem der Ansprüche 1 bis 5, **dadurch gekennzeichnet, dass** die Schenkel (4.23, 4.24, 4.33, 4.34) der Blechschalen (4.21, 4.22, 4.31, 4.32) eine stetig variierende Tiefe über die Länge der jeweiligen Blechschale (4.21, 4.22, 4.31, 4.32) aufweisen.

7. Unterfahrschutz nach einem der Ansprüche 1 bis 6, **dadurch gekennzeichnet, dass** in mindestens eine der Blechschalen (4.21, 4.22, 4.31, 4.32, 4.27, 4.38, 4.28, 4.37) des jeweiligen Endstückes (4.2, 4.3) Sicken (9) und/oder Vertiefungen (10) eingeformt sind.

8. Unterfahrschutz nach einem der Ansprüche 1 bis 7, **dadurch gekennzeichnet, dass** die Blechschalen (4.21, 4.22, 4.31, 4.32, 4.27, 4.38, 4.28, 4.37) im Stumpfstoß miteinander verschweißt sind.

9. Unterfahrschutz nach einem der Ansprüche 1 bis 8, **dadurch gekennzeichnet, dass** das Mittelstück (4.1) aus einem durch Rollformen hergestellten Metallprofil, vorzugsweise Stahlprofil besteht.

10. Unterfahrschutz nach einem der Ansprüche 1 bis 8, **dadurch gekennzeichnet, dass** das Mittelstück (4.1) aus Nichteisen-Werkstoff, vorzugsweise aus Aluminium und/oder Kunststoff gefertigt ist.

11. Unterfahrschutz nach einem der Ansprüche 1 bis 10, **dadurch gekennzeichnet, dass** das Mittelstück (4.1) in die Endstücke (4.2, 4.3) hineinragt.

12. Unterfahrschutz nach einem der Ansprüche 1 bis 11, **dadurch gekennzeichnet, dass** das jeweilige Endstück (4.2, 4.3) mit einem Halter (7) zum Anschrauben einer Trittstufe versehen ist.

13. Unterfahrschutz nach einem der Ansprüche 1 bis 12, **dadurch gekennzeichnet, dass** das jeweilige Endstück (4.2, 4.3) mit einem Halter (8) zum Anschrauben einer Stoßstange versehen ist.

## Claims

1. Underride protection, in particular front underride protection for commercial vehicles, comprising a multi-part crossmember formed of an elongate middle piece (4.1), a right end-piece (4.2) and a left end-piece (4.3), the end pieces (4.2, 4.3) being connected to the middle piece (4.1) and each end piece (4.2, 4.3) being formed of a front sheet metal shell (4.21, 4.31) and a back sheet metal shell (4.22, 4.32), which shells (4.21, 4.22, 4.31, 4.32) of each end piece (4.2, 4.3) define a hollow body portion (4.25, 4.35), of which the average cross-sectional depth (T1) measured in the direction of travel is larger than the average cross-sectional depth (T2), measured in the direction of travel, of the middle piece (4.1), **characterised in that** the sheet metal shells (4.21, 4.22, 4.31, 4.32) of the respective end piece (4.2, 4.3) are produced from sheets of different material quality.

2. Underride protection according to claim 1, **characterised in that** the sheet metal shells (4.21, 4.22, 4.31, 4.32) are produced from sheets of different thickness.

3. Underride protection according to either claim 1 or claim 2, **characterised in that** the sheet metal shells (4.21, 4.22, 4.31, 4.32) of each end piece (4.2, 4.3) are at least in part nested together.

4. Underride protection according to any of claims 1 to 3, **characterised in that** the back sheet metal shell (4.22, 4.32) has a greater sheet thickness than the front sheet metal shell (4.21, 4.31).

5. Underride protection according to claim 4, **characterised in that** the back sheet metal shell (4.22, 4.32) is provided with a shaped sheet metal connection part (4.4, 4.5) for connecting the underride protection to the chassis (2.1) of the commercial vehicle (2), the average cross-sectional depth (T3), measured in the direction of travel, of the front sheet metal shell (4.21, 4.31) in the region of the shaped sheet metal connection part (4.4, 4.5) being at least 1.2 times, preferably at least 2 times, that of the cross-sectional depth (T4) aligned therewith of the back sheet metal shell (4.22, 4.32).

6. Underride protection according to any of claims 1 to 5, **characterised in that** the flanges (4.23, 4.24, 4.33, 4.34) of the sheet metal shells (4.21, 4.22, 4.31, 4.32) have a constantly varying depth along the length of each sheet metal shell (4.21, 4.22, 4.31, 4.32).

7. Underride protection according to any of claims 1 to 6, **characterised in that** beads (9) and/or depressions (10) are formed into at least one of the sheet metal shells (4.21, 4.22, 4.31, 4.32, 4.27, 4.38, 4.28, 4.37) of each end piece (4.2, 4.3).

8. Underride protection according to any of claims 1 to 7, **characterised in that** the sheet metal shells (4.21, 4.22, 4.31, 4.32, 4.27, 4.38, 4.28, 4.37) are butt-welded together.

9. Underride protection according to any of claims 1 to 8, **characterised in that** the middle piece (4.1) consists of a roll-formed metal profile, preferably steel profile.

10. Underride protection according to any of claims 1 to 8, **characterised in that** the middle piece (4.1) is made of non-ferrous material, preferably of aluminium and/or plastics material.

11. Underride protection according to any of claims 1 to 10, **characterised in that** the middle piece (4.1) projects into the end pieces (4.2, 4.3).

12. Underride protection according to any of the claims 1 to 11, **characterised in that** each end piece (4.2, 4.3) is provided with a bracket (7) for the bolting on of a step.

13. Underride protection according to any of claims 1 to 12, **characterised in that** each end piece (4.2, 4.3) is provided with a bracket (8) for the bolting on of a bumper.

## Revendications

1. Protection anti-encastrement, en particulier protection anti-encastrement pour des véhicules utilitaires, comprenant une traverse en plusieurs partie qui est composée d'une pièce médiane longitudinale (4.1), une pièce d'extrémité droite (4.2) et une pièce d'extrémité gauche (4.3), les pièces d'extrémité (4.2, 4.3) étant reliées à la pièce médiane (4.1), la pièce d'extrémité respective (4.2, 4.3) étant composée d'une coque avant en tôle (4.21, 4.31) et d'une coque arrière en tôle (4.22, 4.32), les coques en tôle (4.21, 4.22, 4.31, 4.32) de la pièce d'extrémité respective (4.2, 4.3) définissant une section de corps creux (4.25, 4.35), dont la profondeur de section transversale moyenne (T1) mesurée dans le sens de la marche est supérieure à la profondeur de section transversale (T2), mesurée dans le sens de la route, de la pièce médiane (4.1), **caractérisée en ce que** les coques en tôle (4.21, 4.22, 4.31, 4.32) de la pièce d'extrémité respective (4.2, 4.3) sont fabriquées en tôles de qualités différentes.

2. Protection anti-encastrement selon la revendication 1, **caractérisée en ce que** les coques en tôle (4.21, 4.22, 4.31, 4.32) sont fabriquées en tôles d'épaisseur différentes.

3. Protection anti-encastrement selon la revendication 1 ou 2, **caractérisée en ce que** les coques en tôle (4.21, 4.22, 4.31, 4.32) de la pièce d'extrémité respective (4.2, 4.3) sont au moins partiellement emboîtées.

4. Protection anti-encastrement selon l'une des revendications 1 à 3, **caractérisée en ce que** la coque en tôle arrière (4.22, 4.32) présente une épaisseur de tôle supérieure à celle de la coque en tôle avant (4.21, 4.31).

5. Protection anti-encastrement selon la revendication 4, **caractérisée en ce que** la coque en tôle arrière (4.22, 4.32) est munie d'une pièce formé en tôle de connexion (4.4, 4.5) pour relier la protection anti-encastrement au châssis (2.1) du véhicule utilitaire (2), la profondeur de section transversale moyenne (T3) mesurée dans le sens de la marche est supérieure à la profondeur de section transversale (T4) de la coque en tôle avant (4.21, 4.31) d'au moins d'1,2 fois de préférence d'au moins de 2 fois la profondeur de section transversale mesurée (T4) alignée de la coque en tôle arrière (4.22, 4.32).

6. Protection anti-encastrement selon l'une des revendications 1 à 5, **caractérisée en ce que** les branches (4.23, 4.24, 4.33, 4.34) des coques en tôle (4.21, 4.22, 4.31, 4.32) présentent une profondeur variant en permanence sur la longueur de la coque en tôle respective (4.21, 4.22, 4.31, 4.32).

7. Protection anti-encastrement selon l'une des revendications 1 à 6, **caractérisée en ce que** des nervures (9) et/ou des empreintes (10) sont formées dans au moins une des coques en tôle (4.21, 4.22, 4.31, 4.32, 4,27, 4.38, 4.28, 4.37) de la pièce d'extrémité respective (4.2, 4.3).

8. Protection anti-encastrement selon l'une des revendications 1 à 7, **caractérisée en ce que** les coques en tôle (4.21, 4.22, 4.31, 4.32, 4,27, 4.38, 4.28, 4.37) sont soudées entre elles par joint abouté.

9. Protection anti-encastrement selon l'une des revendications 1 à 8, **caractérisée en ce que** la pièce médiane (4.1) se compose d'un profilé métallique fabriqué par roulage, de préférence un profilé en acier.

10. Protection anti-encastrement selon l'une des revendications 1 à 8, **caractérisée en ce que** la pièce médiane (4.1) est fabriquée à partir d'un matériau non métallique, de préférence en aluminium et/ou matière plastique.

11. Protection anti-encastrement selon l'une des revendications 1 à 10, **caractérisée en ce que** la pièce médiane (4.1) s'engage dans les pièces d'extrémité (4.2, 4.3).

12. Protection anti-encastrement selon l'une des revendications 1 à 11, **caractérisée en ce que** la pièce d'extrémité respective (4.2, 4.3) est munie d'un support (7) pour visser une marche.

13. Protection anti-encastrement selon l'une des revendications 1 à 12, **caractérisée en ce que** la pièce d'extrémité respective (4.2, 4.3) est munie d'un support (8) pour visser un pare-chocs.
